# EUROPEAN PATENT APPLICATION

(11) **EP 2 298 781 A1**
(43) Date of publication of application: **23.03.2011**
(21) Application number: 09750584.6
(22) Date of filing: 20.05.2009
(51) Int. Cl.: C07F 7/18

(54) **METHOD FOR PRODUCING NOVEL SULFUR-CONTAINING ORGANOSILICON COMPOUND**

(30) Priority: 20.05.2008 JP 2008132180; 20.05.2008 JP 2008132184; 29.08.2008 JP 2008221514
(71) Applicant: DAISO CO., LTD., Nishi-ku Osaka-shi Osaka 550-0011 (JP)
(72) Inventor: OOSUMI, Masahiko, Osaka-shi Osaka 550-0011 (JP); YAMADA, Nobuo, Osaka-shi Osaka 550-0011 (JP); ICHINO, Tomoyuki, Osaka-shi Osaka 550-0011 (JP); NAKAMURA, Shoukichi, Osaka-shi Osaka 550-0011 (JP)
(74) Representative: Merkle, Gebhard
(86) International application number: PCT/JP2009/059240
(87) International publication number: WO 2009/142222

(57) **Abstract**

The present invention is to provide a method for obtaining a high-purity sulfur-containing organosilicon compound having a polysulfide structure by an inexpensive method. A sulfur-containing silicon compound represented by the following formula [II] is obtained by performing a first reaction for uniformly mixing an alkali hydrosulfide, sulfur and an alkali hydroxide in the presence of water, then dehydrating the reaction mixture and subsequently adding a halogenoalkoxysilane represented by the following formula [I] in a polar solvent.

(R¹-O)ₙ(R¹)₃₋ₙ-Si-R²-X [I]

(R¹-O)ₙ(R¹)₃₋ₙ-Si-R²-Sₘ-R²-Si-(R¹)₃₋ₙ(O-R¹)ₙ [II]

In the formulae, R¹ is a monovalent hydrocarbon group having from 1 to 16 carbon atoms; R² is a divalent hydrocarbon group having from 1 to 9 carbon atoms; X is a halogen atom; n is an integer of from 1 to 3; and m is an integer of from 1 to 12.

## Description

### TECHNICAL FIELD

The present invention relates to a novel method for producing a sulfur-containing organosilicon compound which is useful as a compounding agent of rubber. Sulfur-containing organosilicon compounds are a substance for coupling a synthetic rubber or a natural rubber having an unsaturated bond with a white filler compounded in the rubber, such as silica, clay, talc, etc., or a filler such as surface-modified carbon black, etc.

### BACKGROUND ART

Sulfur-containing organosilicon compounds are an industrially useful compound which has been known from long, and a large number of production methods have been known from long ago.

As representative methods thereof, a method for obtaining a sulfur-containing organosilicon compound represented by the following general formula [IV] by reacting a halogeno-organosilane represented by the following general formula [III], anhydrous sodium sulfide and sulfur in a solvent at from 70 to 80 °C for several hours is known (see Patent Document 1).

(R¹-O)₃-Si-R²-X [III]

(R¹-O)₃-Si-R²-Sₘ-R²-Si- (O-R¹)₃ [IV]

(In the respective formulae, R¹ is a lower alkyl group, a lower aralkyl group, a lower cycloalkyl group, a lower aryl group, a lower alkoxy group, a lower cycloalkoxy group, an aryloxy group or the like; R² is a lower alkylene group; X is a halogen atom; and m is an integer of from 2 to 6.)

However, according to this method, since after preparing anhydrous sodium sulfide, sulfur is added in conformity with a desired chain amount of sulfur of the sulfur-containing organosilicon compound, there was involved such a problem that the opening and closing of a reaction tank is necessary, so that a man-hour increases.

As a method not using anhydrous sodium polysulfide, a method for obtaining a sulfur-containing organosilicon compound by reacting sodium hydroxide and sulfur in a saturated sodium chloride aqueous solution and adding a halogenoalkoxysilane and a phase transfer catalyst in toluene is known (see Patent Document 2).

However, this method involved such drawbacks that many side-reactions occur and that the yield is low.

As another method not using anhydrous sodium polysulfide, a method of reacting granular sodium hydroxide and powdered sulfur in the presence of an inert gas at from 100 °C to 110 °C, vacuum dehydrating the reaction mixture and then reacting with a halogenoalkoxysilane (see Patent Document 3).

However, as a result of replication of this method, it has been noted that the reaction between granular sodium hydroxide and powdered sulfur is not advanced.

As a method for obtaining the sulfur-containing organosilicon compound [IV], a method of reacting the halogeno-organosilane [III] and sodium hydrosulfide is disclosed (see Patent Document 4).

However, there was involved such a problem that poisonous hydrogen sulfide is produced due to a side-reaction.

### PRIOR ART DOCUMENT

### PATENT DOCUMENT

Patent Document 1: JP-A-7-228588
Patent Document 2: U.S. Patent No. 5,663,396
Patent Document 3: JP-A-2001-39985
Patent Document 4: JP-B-57-26671

### DISCLOSURE OF THE INVENTION

### PROBLEMS THAT THE INVENTION IS TO SOLVE

In view of the foregoing problems of the prior art, a problem of the present invention is to provide a method for obtaining a high-purity sulfur-containing organosilicon compound having a polysulfide structure by an inexpensive and simple method.

### MEANS FOR SOLVING THE PROBLEMS

In order to solve the foregoing problem, the present inventors made extensive and intensive investigations. As a result, they have found a method for producing a novel sulfur-containing organosilicon compound by the following first, second and third inventions.

A first invention is concerned with a method for obtaining a sulfur-containing organosilicon compound represented by the following general formula [II] by using an inexpensive alkali hydroxide and uniformly mixing this with an alkali hydrosulfide and sulfur in the presence of water under an inert gas atmosphere to allow the mixture to react, and after dehydrating the reaction mixture obtained in this first reaction, performing a second reaction of reacting it with a halogenoalkoxysilane represented by the following general formula [I] in the presence of a polar solvent.

A second invention is concerned with a method for obtaining a sulfur-containing organosilicon compound represented by the above mentioned general formula [II] by using an inexpensive alkali hydroxide and uniformly mixing this with sulfur in the presence of water under an inert gas atmosphere to allow the mixture to react, and after dehydrating the reaction mixture obtained in this first reaction, performing a second reaction of reacting it with a halogenoalkoxysilane represented by the above mentioned general formula [I] in the presence of a polar solvent.

A third invention is concerned with a method for obtaining a sulfur-containing organosilicon compound represented by the above mentioned general formula [II] by mixing an alkali hydroxide, an alkali hydrosulfide and sulfur (or an alkali sulfide and sulfur) in the presence of water and a solvent capable of undergoing azeotropy with water under an inert gas atmosphere to allow the mixture to react, and after dehydrating the reaction mixture obtained in this first reaction by azeotropy, performing a second reaction of reacting it with a halogenoalkoxysilane represented by the above mentioned general formula [I] in the presence of a polar solvent.

(R¹-O)ₙ(R¹)₃₋ₙ-Si-R²-X [I]

(In the formula, R¹ is a monovalent hydrocarbon group having from 1 to 16 carbon atoms; R² is a divalent hydrocarbon group having from 1 to 9 carbon atoms; X is a halogen atom; and n is an integer of from 1 to 3.)

(R¹-O)ₙ(R¹)₃₋ₙ-Si-R²-Sₘ-R²-Si-(R¹)₃₋ₙ(O-R¹)ₙ [II]

(In the formula, R¹ and R² are the same as the definitions of the general formula [I]; n is an integer of from 1 to 3; and m is an integer of from 1 to 12.)

That is, the first invention is a method for producing a sulfur-containing organosilicon compound comprising mixing an alkali hydrosulfide, sulfur and an alkali hydroxide at from 50 to 150 °C in the presence of water under an inert gas atmosphere to allow the mixture to react, and after dehydrating the obtained reaction mixture, reacting it with a halogenoalkoxysilane represented by the foregoing general formula [I] in a polar solvent to obtain a sulfur-containing organosilicon compound represented by the foregoing general formula [II].

The second invention is a method for producing a sulfur-containing organosilicon compound comprising mixing sulfur and an alkali hydroxide at from 50 to 150 °C in the presence of water under an inert gas atmosphere to allow the mixture to react, and after dehydrating the obtained reaction mixture, reacting it with a halogenoalkoxysilane represented by the following general formula [I] in a polar solvent to obtain a sulfur-containing organosilicon compound represented by the following general formula [II].

The third invention is a method for producing a sulfur-containing organosilicon compound comprising mixing an alkali hydroxide, an alkali hydrosulfide and sulfur, or an alkali sulfide and sulfur, in the presence of water and a solvent capable of undergoing azeotropy with water under an inert gas atmosphere to allow the mixture to react, and after dehydrating the obtained reaction mixture by azeotropy, reacting it with a halogenoalkoxysilane represented by the following general formula [I] in a polar solvent to obtain a sulfur-containing organosilicon compound represented by the following general formula [II].

### ADVANTAGEOUS EFFECTS

a) In the first to third inventions, since poisonous hydrogen sulfide is not produced, a stage of treating hydrogen sulfide is unnecessary, so that not only the method is safe, but the steps can be simplified. Thus, the method is very advantageous in view of the production costs. In the second invention, since a malodorous alkali hydrosulfide or alkali sulfide is not used at all, there is no problem regarding odors.
b) In the prior art, in order to prevent the hydrolysis of a halogeno-organosilane and a sulfur-containing organosilicon compound, it was required to very strictly control the moisture of substances to be used for the reactions and in the reaction stages.

In the first invention, though the alkali hydrosulfide with high hygroscopicity is used in the first reaction stage of uniformly mixing the alkali hydrosulfide, sulfur and the alkali hydroxide to allow the mixture to react, since the reaction is performed in the presence of water, consideration regarding the hygroscopicity of the alkali hydrosulfide is substantially unnecessary.

In the second invention, since the reaction is performed in the presence of water, consideration regarding the moisture of raw materials at the time of charging the raw materials is not necessary.

In the third invention, though the alkali hydrosulfide or alkali sulfide with high hygroscopicity is used in the first reaction stage of mixing the alkali hydroxide, the alkali hydrosulfide and sulfur, or the alkali sulfide and sulfur, to allow the mixture to react, since the reaction is performed in the presence of water, consideration regarding the hygroscopicity of the alkali hydrosulfide or alkali sulfide is substantially unnecessary.
c) In many conventional methods for producing the sulfur-containing organosilicon compound [IV], after forming an anhydrous alkali sulfide, a stage of reacting this with sulfur was necessary.

In the first invention, since at the beginning of the first reaction stage of uniformly mixing the alkali hydrosulfide, sulfur and the alkali hydroxide to allow the mixture to react, necessary amounts of these raw material compounds can be collectively charged in conformity with the sulfur chain of the desired sulfur-containing organosilicon compound, a stage of further adding sulfur is unnecessary, so that the steps can be simplified.

In the second invention, since at the beginning of the first reaction stage of uniformly mixing sulfur and the alkali hydroxide to allow the mixture to react, necessary amounts of these raw material compounds can be collectively charged in conformity with the sulfur chain of the desired sulfur-containing organosilicon compound, a stage of further adding sulfur is unnecessary, so that the steps can be simplified.

The method of the third invention is a method in which at the beginning of the first reaction stage of mixing the alkali hydroxide, the alkali hydrosulfide and sulfur, or the alkali sulfide and sulfur, to allow the mixture to react, necessary amounts of these raw material compounds are preferably charged collectively in conformity with the sulfur chain of the desired sulfur-containing organosilicon compound, to perform the first reaction upon heating preferably at from 50 to 130 °C for preferably from 15 to 60 minutes, and after dehydrating by azeotropy, the reaction mixture is reacted with the halogenoalkoxysilane of the general formula [I] in a polar solvent, thereby producing the sulfur-containing organosilicon compound represented by the general formula [II]. The alkali hydrosulfide is a precursor of the alkali sulfide, and the alkali hydroxide represented by inexpensive sodium hydroxide can be used as another alkali source. Also, after obtaining anhydrous sodium sulfide as in, for example, JP-A-7-228588 as the prior art, since sulfur is not added, a stage of further adding sulfur is unnecessary; and since the opening and closing of a reaction tank may not be required, it is possible to reduce the production time or man-hour, so that the steps can be simplified. Furthermore, the first reaction easily proceeds because it is performed in a solvent, and the first reaction stage is substantially completed by the step of removing water by azeotropy.
d) In addition, in the first to third inventions, since the reaction mixture in the first stage is dehydrated, the dehydrated reaction mixture can be provided for the subsequent second reaction stage without isolating and purifying the reaction product from the reaction mixture in the first stage. In consequence, an isolation and purification stage of the reaction product from the reaction mixture in the first stage is not necessary, so that the steps can also be simplified on this point.
e) In mixing the alkali hydrosulfide, sulfur and the alkali hydroxide (or sulfur and the alkali hydroxide), if granular sodium hydroxide as described in JP-A-2001-399985 is used, the reaction is not advanced even at 170 °C. However, since the reaction in the first stage in each of the first to third inventions is performed in the presence of water, the reaction proceeds without hindrance.
f) According to the first to third inventions, the sulfur-containing organosilicon compound represented by the general formula [II] can be obtained inexpensively and efficiently. In particular, the first and third inventions are preferable because the reaction mixture obtained in each of the first and third inventions through the reaction of the alkali hydrosulfide, sulfur and the alkali hydroxide as raw materials efficiently reacts with the halogenoalkoxysilane represented by the general formula [I] as compared with the reaction mixture obtained in the second invention through the reaction of sulfur and the alkali hydroxide as raw materials, and therefore.

### MODE FOR CARRYING OUT THE INVENTION

First of all, the first invention is described in detail.

In the first invention, the reaction in the first stage of obtaining a reaction mixture by uniformly mixing an alkali hydrosulfide, sulfur and an alkali hydroxide is described.

In the reaction in the first stage, the alkali hydrosulfide to be used may be sodium hydrosulfide or potassium hydrosulfide. The alkali hydrosulfide may be a hydrous alkali hydrosulfide which is a hydrate, or an anhydrous alkali hydrosulfide. As described above, since the reaction in the first stage is performed in the presence of water, it is not necessary to convert a hydrous alkali hydrosulfide into an anhydride, and it is preferable to use the hydrous alkali hydrosulfide as it is.

Though it does not matter whether the shape of sulfur which is used in the first stage is powdered, flaky or granular, powdered sulfur having a fine particle size is preferable for shortening the reaction time.

As the alkali hydroxide which is used in the first stage, sodium hydroxide, potassium hydroxide and the like can be exemplified. In this connection, since water is necessary for the reaction in the first stage, it is preferable to use the alkali hydroxide in a form of an aqueous solution, for example, a 48 % sodium hydroxide aqueous solution.

In the first stage, sulfur is dissolved in water while reacting with the alkali hydrosulfide and the alkali hydroxide, each of which is dissolved in water, to form a uniform mixture. On that occasion, the reaction temperature is preferably from 50 °C to 150 °C, and more preferably from 80 °C to 120 °C. By allowing the reaction temperature to fall within the range of from 50 °C to 150 °C, the reaction in the first stage is advanced substantially uniformly, and the reaction is easy to proceed.

Since the raw material alkali hydrosulfide and the formed alkali polysulfide are a substance which is easily oxidized, it is preferable to perform the reaction in the first stage under an inert gas atmosphere such as a sufficiently dried nitrogen gas or argon gas atmosphere, etc.

Next, the dehydration of the reaction mixture in the first stage is described.

The dehydration means of the reaction mixture in the first stage is performed for the purpose of preventing the hydrolysis of the halogenoalkoxysilane represented by the general formula [I] and the sulfur-containing organosilicon compound represented by the general formula [II], and it is not particularly limited so far as the moisture can be removed. The hydration is preferably heating under reduced pressure or at atmospheric pressure, or moisture evaporation by azeotropy of an azeotropic solvent and water. It is preferable that heating is performed under an inert gas atmosphere. The heating means may be heating using an electric heater or an oil bath, high-frequency heating or the like.

By dehydrating the reaction mixture in the first stage, the reaction mixture in the first stage can be provided for the subsequent second reaction stage without isolating and purifying the reaction product from the reaction mixture. In consequence, an isolation and purification stage of the reaction product from the reaction mixture in the first stage is not necessary.

In the case of performing the dehydration by heating under reduced pressure, the temperature is preferably from 80 °C to 200 °C, and more preferably from 120 °C to 170 °C. Also, the degree of reduced pressure is preferably not more than 80 Torr, and more preferably not more than 50 Torr.

In the case of performing the dehydration by heating under an inert gas atmosphere, it is preferable that the reaction mixture in the first stage is, for example, powdered under hot air at a temperature of from 120 °C to 400 °C, or powdered by dehydration using a drum dryer. In that case, the heating temperature is preferably from 150 °C to 300 °C.

It is preferable that the moisture evaporation by azeotropy of an azeotropic solvent and water is performed under an inert gas atmosphere such as a nitrogen gas, an argon gas, etc. The azeotropic solvent which is used is not particularly limited so far as it undergoes azeotropy with water, and the dehydration is performed by adding an azeotropic solvent such as xylene, toluene, benzene, hexane, pentane, octane, nonane, decane, undecene, etc. to the reaction mixture, thereby undergoing azeotropy of water. An azeotropic solvent having a boiling point of from 100 °C to 150 °C, such as xylene, toluene, octane, nonane, etc., is especially preferable.

In the case of performing the dehydration by high-frequency heating, though the reaction mixture may be irradiated with high-frequency waves until the moisture varnishes, in general, the reaction mixture can be dehydrated by irradiation of high-frequency waves continuously or intermittently under an inert gas atmosphere for from 5 to 30 minutes.

After dehydration, there is a possibility that though the mixture containing an alkali polysulfide deposits onto the inside of a vessel, the deposit can be easily converted into a slurry by a polar solvent which is used in a second reaction stage as described layer, so that there is no problem in view of the steps.

Next, the second reaction stage of reacting the dehydrated reaction mixture in the first stage and the halogenoalkoxysilane represented by the general formula [I] in a polar solvent, to obtain the sulfur-containing organosilicon compound represented by the general formula [II] is described.

In the halogenoalkoxysilane represented by the general formula [I]:

(R¹-O)ₙ(R¹)₃₋ₙ-Si-R²-X [I]

each R¹ may be the same as or different from every other R¹ and is not particularly limited so far as it is a linear or branched monovalent hydrocarbon group having from 1 to 16 carbon atoms. R¹ is especially preferably a methyl group, an ethyl group or a combination thereof. R² may be a linear or branched divalent hydrocarbon group having from 1 to 9 carbon atoms. R² is especially preferably -CH₂-, -CH₂CH₂-, -CH₂CH₂CH₂-, -CH₂CH₂-Ph-CH₂- (Ph is a phenylene group) or the like. X is a halogen atom, and examples thereof include chlorine, bromine, iodine, etc.

As the polar solvent, an alcohol, an ether, a ketone and a combination thereof can be exemplified, with an alcohol being preferable.

As the alcohol, methanol, ethanol and propanol can be exemplified, with ethanol being preferable.

As the ether, tetrahydrofuran, 2-methyltetrahydrofuran, tetrahydropyran, crown ether, dimethoxyethane, diethylene glycol dimethyl ether, triethylene glycol dimethyl ether, diethylene glycol dibutyl ether and propylene glycol dimethyl ether can be exemplified.

As the ketone, acetone and methyl ethyl ketone can be exemplified.

The reaction temperature of the second reaction stage is preferably from 40 °C to 100 °C. Also, in order to prevent the hydrolysis of the halogenoalkoxysilane represented by the general formula [I] and the sulfur-containing organosilicone compound represented by the general formula [II], it is preferable to perform the second reaction stage under an inert gas atmosphere such as a sufficiently dried nitrogen gas or argon gas atmosphere, etc.

Next, the second invention is described in detail.

In the second invention, the reaction in the first stage of obtaining a reaction mixture by uniformly mixing sulfur and an alkali hydroxide is described.

Though it does not matter whether the shape of sulfur which is used in the first stage is powdered, flaky or granular, powdered sulfur having a fine particle size is preferable for shortening the reaction time.

As the alkali hydroxide which is used in the first stage, sodium hydroxide, potassium hydroxide and the like can be exemplified. In this connection, since water is necessary for the reaction in the first stage, it is preferable to use the alkali hydroxide in a form of an aqueous solution, for example, a 48 % sodium hydroxide aqueous solution.

In the first stage, sulfur is dissolved in water while reacting with the alkali hydroxide dissolved in water, to form a uniform mixture. On that occasion, the reaction temperature is preferably from 50 °C to 150 °C, and more preferably from 80 °C to 120 °C. By allowing the reaction temperature to fall within the range of from 50 °C to 150 °C, the reaction in the first stage is advanced substantially uniformly, and the reaction is easy to proceed.

Since the formed alkali polysulfide is a substance which is easily oxidized, it is preferable to perform the reaction in the first stage under an inert gas atmosphere such as a sufficiently dried nitrogen gas or argon gas atmosphere, etc.

Next, the dehydration of the reaction mixture in the first stage in the second invention may be the same as the dehydration of the reaction mixture in the first stage in the foregoing first invention, and therefore, its explanation is omitted.

Next, in the second invention, the second reaction stage of obtaining the sulfur-containing organosilicon compound represented by the general formula [II] by reacting the dehydrated reaction mixture in the first stage and the halogenoalkoxysilane represented by the general formula [I] in a polar solvent may also be the same as the second reaction stage in the foregoing first invention, and therefore, its explanation is omitted.

Next, the third invention is described in detail.

In the third invention, the reaction in the first stage of obtaining a reaction mixture by mixing an alkali hydrosulfide, sulfur and an alkali hydroxide, or an alkali sulfide and sulfur, in the presence of water and a solvent capable of undergoing azeotropy with water under an inert gas atmosphere is described.

The reaction mixture obtained by the reaction in the first stage is obtained by mixing an alkali hydrosulfide, sulfur and an alkali hydroxide, or an alkali sulfide and sulfur, in the presence of water and a solvent capable of undergoing azeotropy with water under an inert gas atmosphere.

In the case of obtaining the reaction mixture by mixing an alkali hydrosulfide, sulfur and an alkali hydroxide, the alkali hydrosulfide to be used may be sodium hydrosulfide or potassium hydrosulfide. The alkali hydrosulfide may be a hydrous alkali hydrosulfide which is a hydrate, or an anhydrous alkali hydrosulfide. Since the reaction is performed in the presence of water, it is not necessary to convert a hydrous alkali hydrosulfide into an anhydride, and it is preferable to use the hydrous alkali hydrosulfide as it is.

Though it does not matter whether the shape of sulfur to be used is powdered, flaky or granular, powdered sulfur having a fine particle size is preferable for shortening the reaction time.

As the alkali hydroxide to be used, sodium hydroxide, potassium hydroxide and the like can be exemplified. In this connection, since water is necessary for the reaction in the first stage, it is preferable to use the alkali hydroxide in a form of an aqueous solution, for example, a 48 % sodium hydroxide aqueous solution because such is the most inexpensive.

In the case of obtaining the reaction mixture by mixing an alkali sulfide and sulfur, the alkali sulfide to be used may be sodium sulfide or potassium sulfide. The alkali sulfide may be a hydrous alkali sulfide which is a hydrate, or an anhydrous alkali sulfide. Since the reaction is performed in the presence of water, it is not necessary to convert a hydrous alkali sulfide into an anhydride, and it is preferable to use the hydrous alkali sulfide as it is.

Though it does not matter whether the shape of sulfur to be used is powdered, flaky or granular, powdered sulfur having a fine particle size is preferable for shortening the reaction time.

As the solvent capable of undergoing azeotropy with water, a solar solvent such as an alcohol, an ether and a ketone is preferable.

As the alcohol, methanol, ethanol and propanol can be exemplified, with ethanol being preferable.

As the ether, tetrahydrofuran, 2-methyltetrahydrofuran, tetrahydropyran, crown ether, dimethoxyethane, diethylene glycol dimethyl ether, triethylene glycol dimethyl ether, diethylene glycol dibutyl ether and propylene glycol dimethyl ether can be exemplified.

As the ketone, acetone and methyl ethyl ketone can be exemplified.

In the reaction in the first stage, since the reaction mixture is dissolved in water and the solvent capable of undergoing azeotropy with water while sulfur reacts with the alkali hydrosulfide and the alkali hydroxide, or the alkali sulfide, each of which is dissolved in water, and the solvent capable of undergoing azeotropy with water, a more uniform mixture is formed by using these solvents.

Since the raw material alkali hydrosulfide or alkali sulfide and the formed alkali polysulfide are a substance which is easily oxidized, it is preferable to perform the reaction in the first stage under an inert gas atmosphere such as a sufficiently dried nitrogen gas or argon gas atmosphere, etc.

The reaction temperature in the first stage is preferably from room temperature to an azeotropic temperature at which water and the foregoing solvent undergo azeotropy.

The reaction time in the first stage may be a time for which a flaky substance such as the alkali hydrosulfide, sulfur or the alkali sulfide, etc. becomes in a slurry form, and though it varies with the reaction scale, it may be generally from 15 to 60 minutes.

Next, the dehydration for dehydrating the reaction mixture obtained by the reaction in the first stage by azeotropy of water and the solvent capable of undergoing azeotropy is described.

So far as the condition of the dehydration by azeotropy is a condition of temperature and pressure under which water and the solvent undergo azeotropy, there is no particular problem.

The solvent contained in the distillate which is obtained by azeotropy of water and the solvent can be reused upon being recovered. In the case of such a solvent that water and the solvent are separated from each other as a water layer and an oil layer, liquid separation is performed, and the solvent can be then used upon being circulated; and in the case of a solvent which is not separated from water, purification is performed by a membrane separation method or by using other solvent, and the solvent can be then used upon being circulated.

After the dehydration, though there is a possibility that the mixture containing an alkali polysulfide deposits onto the inside of a vessel, the deposit can be easily converted into a slurry by a polar solvent which is used in a second reaction stage as described layer, so that there is no problem in view of the steps.

Next, in the third invention, the second reaction stage of obtaining the sulfur-containing organosilicon compound represented by the general formula [II] by reacting the dehydrated reaction mixture in the first stage and the halogenoalkoxysilane represented by the general formula [I] in a polar solvent may also be the same as the second reaction stage in the foregoing first invention, and therefore, its explanation is omitted.

### EXAMPLES

The present invention is specifically described below by showing the Examples of the present invention and the Comparative Examples to be compared therewith, but it should not be construed that the present invention is limited to the following Examples.

Examples 1 to 4 are corresponding to the first invention, Examples 5 to 7 are corresponding to the second invention, and Examples 8 to 9 are corresponding to the third invention.

### Example 1

In a 200-mL three-necked flask, 3.71 g of hydrous sodium hydrosulfide having a purity of 72.3 %, 3.94 g of a 48 % sodium hydroxide aqueous solution and 2.3 g of sulfur were charged, and these were uniformly mixed while heating on an oil bath at 140 °C under a nitrogen gas stream. After lapsing about 15 minutes, this mixture turned to a deeply brown solution. Thereafter, stirring was performed for one hour. This reaction mixture was heated at a temperature of 150 °C under a pressure of 3 Torr for 3 hours, thereby achieving dehydration. There was thus obtained a reddish brown reaction mixture containing anhydrous sodium polysulfide.

110 g of ethanol which had been dehydrated by a molecular sieve was added to the foregoing reaction mixture after dehydration; after stirring for 30 minutes, 20.8 g of triethoxysilylpropyl chloride (abbreviated as "TESPC") was added; and the mixture was reacted at 60 °C. After lapsing 3 hours, 93.4 % of TESPC was consumed. The obtained reaction mixture was filtered with a filter paper, and the ethanol was then distilled off. There was thus obtained 20.6 g of a sulfur-containing organosilicon compound having a polysulfide structure as a pale yellow liquid. An average chain length of sulfur of this compound by NMR was 2.36.

### Example 2

In a 200-mL three-necked flask, 3.21 g of hydrous sodium hydrosulfide having a purity of 72.3 %, 3.46 g of a 48 % sodium hydroxide aqueous solution and 3.83 g of sulfur were charged, and these were uniformly mixed while heating on an oil bath at 140 °C under a nitrogen gas stream. After lapsing about 15 minutes, this mixture turned to a deeply brown solution. Thereafter, stirring was performed for one hour. This reaction mixture was heated at a temperature of 150 °C under a pressure of 3 Torr for 3 hours, thereby achieving dehydration. There was thus obtained an orange-colored reaction mixture containing anhydrous sodium polysulfide.

110 g of ethanol which had been dehydrated by a molecular sieve was added to the foregoing reaction mixture after dehydration; after stirring for 30 minutes, 19.1 g of TESPC was added; and the mixture was reacted at 60 °C. After lapsing 3 hours, 97.3 % of TESPC was consumed. The obtained product was filtered with a filter paper, and the ethanol was then distilled off. There was thus obtained 19.7 g of a sulfur-containing organosilicon compound having a polysulfide structure as a pale yellow liquid. An average chain length of sulfur of this compound by NMR was 3.73.

### Example 3

In a 200-mL three-necked flask, 7.76 g of hydrous sodium hydrosulfide having a purity of 72.3 %, 8.23 g of a 48 % sodium hydroxide aqueous solution and 9.6 g of sulfur were charged, and these were uniformly mixed while heating on an oil bath at 140 °C under a nitrogen gas stream. After lapsing about 15 minutes, this mixture turned to a deeply brown solution. Thereafter, stirring was performed for 30 minutes. 52 g of toluene which had been dehydrated by a molecular sieve was added to this reaction mixture, thereby undergoing azeotropy of toluene and water, and the toluene was distilled off together with water. This azeotropic operation was repeated 3 times. There was thus obtained a product containing anhydrous sodium polysulfide.

55 g of ethanol which had been dehydrated by a molecular sieve was added to the foregoing reaction mixture after dehydration; 48.3 g of TESPC was added while stirring; and the mixture was reacted at 80 °C. After lapsing 4 hours, 98.9 % of TESPC was consumed. The obtained product was filtered with a filter paper, and the ethanol was then distilled off. There was thus obtained 47.6 g of a sulfur-containing organosilicon compound having a polysulfide structure as a pale yellow liquid. An average chain length of sulfur of this compound by NMR was 2.36.

### Example 4

In a 200-mL three-necked flask, 3.66 g of hydrous sodium hydrosulfide having a purity of 72.3 %, 3.94 g of a 48 % sodium hydroxide aqueous solution and 2.3 g of sulfur were charged, and these were uniformly mixed while heating on an oil bath at 140 °C under a nitrogen gas stream. After lapsing about 15 minutes, this mixture turned to a deeply brown solution. Thereafter, stirring was performed for 30 minutes. This reaction mixture was irradiated with high-frequency waves under a nitrogen gas stream at 2,450 MHz and at 500 W for 2 minutes. As a result, water drops were observed in an upper part of the flask. As a result of irradiation with high-frequency waves at 200 W for an additional 5 minutes, the water drops were not observed. There was thus obtained a reddish brown product containing anhydrous sodium polysulfide.

110 g of ethanol which had been dehydrated by a molecular sieve was added to the foregoing reaction mixture after dehydration; after lapsing one hour, 19.72 g of TESPC was added while stirring; and the mixture was reacted at 80 °C. After lapsing 4 hours, 94.5 % of TESPC was consumed. The obtained product was filtered with a filter paper, and the ethanol was then distilled off. There was thus obtained 19.2 g of a sulfur-containing organosilicon compound having a polysulfide structure as a pale yellow liquid. An average chain length of sulfur of this compound by NMR was 2.38.

### Comparative Example 1

In a 200-mL three-necked flask, 3.21 g of hydrous sodium hydrosulfide having a purity of 72.3 %, 1.68 g of granular sodium hydroxide and 3.83 g of sulfur were charged, and these were uniformly mixed while heating on an oil bath at 140 °C under a nitrogen gas stream. After lapsing 15 minutes, though sulfur was dissolved, the granules of granular sodium hydroxide were observed. Furthermore, the temperature was elevated to 170 °C, and the system was allowed to stand for 30 minutes. However, the granules of granular sodium hydroxide were still observed.

Subsequently, the temperature of the oil bath was set up at 140 °C, and 2 mL of water was added. The reaction mixture immediately turned to a brown uniform solution, the foregoing reaction in the first stage was advanced, and a product containing sodium polysulfide was found.

As in Examples 1 to 4, by performing the first stage reaction of uniformly mixing an alkali hydroxide, an alkali hydrosulfide and sulfur in the presence of water, subsequently dehydrating the reaction mixture and then reacting with a halogenoalkoxysilane in the second stage, a useful sulfur-containing organosilicon compound is easily obtained. On the other hand, as in Comparative Example 1, the reaction in the first stage of uniformly mixing raw materials is not substantially advanced in a system where liberated water does not exist.

### Example 5

In a 200-mL three-necked flask, 4.2 g of flaky sulfur and 8.6 g of a 48 % sodium hydroxide aqueous solution were charged, and these were uniformly mixed while heating on an oil bath at 140 °C under a nitrogen gas stream. After lapsing about 15 minutes, this mixture turned to a deeply brown solution. Thereafter, stirring was performed for one hour. This reaction mixture was heated at a temperature of 150 °C under a pressure of 3 Torr for 3 hours, thereby achieving dehydration and drying. There was thus obtained a reddish brown reaction mixture containing anhydrous sodium polysulfide.

110 g of ethanol which had been dehydrated by a molecular sieve was added to the foregoing reaction mixture after drying; after stirring for 30 minutes, 16.9 g of TESPC was added; and the mixture was reacted at 60 °C. After lapsing 3 hours, gas chromatography revealed that 90. 5 % of TESPC was consumed. The obtained reaction mixture was filtered with a filter paper, and the ethanol was then distilled off. There was thus obtained 16.6 g of a sulfur-containing organosilicon compound having a polysulfide structure as a pale yellow liquid. An average chain length of sulfur of this compound by NMR was 2.75.

### Example 6

In a 200-mL three-necked flask, 5.18 g of powdered sulfur and 6.90 g of a 48 % sodium hydroxide aqueous solution were charged, and these were uniformly mixed while heating on an oil bath at 140 °C under a nitrogen gas stream. After lapsing about 15 minutes, this mixture turned to a brown solution. Thereafter, stirring was performed for one hour. This reaction mixture was heated at a temperature of 150 °C under a pressure of 3 Torr for 3 hours, thereby achieving dehydration and drying. There was thus obtained an orange-colored reaction mixture containing anhydrous sodium polysulfide.

110 g of ethanol which had been dehydrated by a molecular sieve was added to the foregoing reaction mixture after drying; after stirring for 30 minutes, 14.45 g of TESPC was added; and the mixture was reacted at 60 °C for 3 hours. As a result, gas chromatography revealed that 93.8 % of TESPC was consumed. The obtained reaction mixture was filtered with a filter paper, and the ethanol was then distilled off. There was thus obtained 15.4 g of a sulfur-containing organosilicon compound having a polysulfide structure as a pale yellow liquid. An average chain length of sulfur of this compound by NMR was 3.73.

### Example 7

In a 200-mL three-necked flask, 4.2 g of sulfur and 8.6 g of a 48 % sodium hydroxide aqueous solution were charged, and these were uniformly mixed while heating on an oil bath at 140 °C under a nitrogen gas stream. After lapsing about 15 minutes, this mixture turned to a deeply brown solution. Thereafter, stirring was performed for 30 minutes. This reaction mixture was irradiated with high-frequency waves under a nitrogen gas stream at 2,450 MHz and at 500 W for 2 minutes. As a result, water drops were observed in an upper part of the flask. As a result of irradiation with high-frequency waves at 200 W for an additional 7 minutes, the water drops were not observed. There was thus obtained a reddish brown product containing anhydrous sodium polysulfide.

110 g of ethanol which had been dehydrated by a molecular sieve was added to the foregoing reaction mixture after drying; after stirring for 2 hours, 16.9 g of TESPC was added; and the mixture was reacted at 80 °C for 4 hours. Gas chromatography revealed that 86.4 % of TESPC was consumed. The obtained reaction mixture was filtered with a filter paper, and the ethanol was then distilled off. There was thus obtained 16.3 g of a sulfur-containing organosilicon compound having a polysulfide structure as a pale yellow liquid. An average chain length of sulfur of this compound by NMR was 2.67.

### Comparative Example 2

In a 200-mL three-necked flask, 4.2 g of powdered sulfur and 4.2 g of granular sodium hydroxide were charged, and these were uniformly mixed while heating on an oil bath at 140 °C under a nitrogen gas stream. After lapsing 15 minutes, though sulfur was dissolved, the granules of granular sodium hydroxide were observed. Furthermore, the temperature was elevated to 170 °C, and the system was allowed to stand for 30 minutes. However, the granules of granular sodium hydroxide were still observed.

Subsequently, the temperature of the oil bath was set up at 140 °C, and 2 mL of water was added. The reaction mixture immediately turned to a brown uniform solution, the foregoing reaction in the first stage was advanced, and a product containing sodium polysulfide was found.

As in Examples 5 to 7, by performing the first stage reaction of uniformly mixing an alkali hydroxide and sulfur in the presence of water, subsequently dehydrating and drying the reaction mixture and then reacting with a halogenoalkoxysilane in the second stage, a useful sulfur-containing organosilicon compound is easily obtained. On the other hand, as in Comparative Example 2, the reaction in the first stage of uniformly mixing raw materials is not substantially advanced in a system where liberated water does not exist.

### Example 8

In a 200-mL three-necked flask, 6.24 g of hydrous sodium sulfide trihydrate, 2.3 g of sulfur, 1 g of ion exchanged water and 110 g of toluene were charged, and these were mixed while heating on an oil bath at 100 °C under a nitrogen gas stream. After lapsing about 15 minutes, this mixture turned to a deeply brown solution. A water distillation receiver-equipped condenser was installed, and the temperature was elevated to 130 °C, thereby separating refluxed toluene from water. After lapsing about 5 hours, after refluxing changed to one of only toluene, the toluene was distilled off. There was thus obtained a reaction mixture containing anhydrous sodium polysulfide.

110 g of ethanol which had been dehydrated by a molecular sieve was added to the foregoing reaction mixture after dehydration, and after stirring for 30 minutes, 19.1 g of TESPC was added. After lapsing 3 hours at 60 °C, 99.9 % of TESPC was consumed. The obtained reaction mixture was filtered with a filter paper, and the ethanol was then distilled off. There was thus obtained 19.1 g of a sulfur-containing organosilicon compound having a polysulfide structure. An average chain length of sulfur of this material by NMR was 2.42.

### Example 9

In a 200-mL three-necked flask, 10. 97 g of hydrous sodium hydrosulfide having a purity of 72.3 %, 11.81 g of a 48 % sodium hydroxide aqueous solution, 6.9 g of sulfur and 60 g of ethanol were charged, and these were mixed while heating on an oil bath at 80 °C under a nitrogen gas stream. After lapsing about 15 minutes, this mixture turned to a deeply brown solution. Furthermore, 50 g of ethanol was added; 90 g of an azeotropic mixed solution of ethanol and water was distilled off at 130 °C; and thereafter, 90 g of ethanol which had been dehydrated by a molecular sieve was added, thereby distilling off 90 g of an azeotrope. The same operation was repeated 6 times in total. There was thus obtained a reaction mixture containing anhydrous sodium polysulfide.

A total moisture content obtained by measuring the moisture in the distilled-off ethanol by a Karl Fischer moisture meter was 11.2 g. The amount of water to be produced according to calculations is 11.6 g, and it is calculated that 96.6 % of water is removed.

40 g of ethanol which had been dehydrated by a molecular sieve was added to the foregoing reaction mixture after hydration, and after stirring for 30 minutes, 59.2 g of TESPC was added. After lapsing 3 hours at 60 °C, 98.9 % of TESPC was consumed. The obtained reaction mixture was filtered with a filter paper, and the ethanol was then distilled off. There was thus obtained 58.9 g of a sulfur-containing organosilicon compound having a polysulfide structure. An average chain length of sulfur of this material by NMR was 2.36.

As in Examples 8 and 9, by performing the first stage reaction of heat mixing an alkali hydroxide with a hydrous alkali hydrosulfide and sulfur, or a hydrous alkali sulfide and sulfur, in a solvent capable of undergoing azeotropy with water in the presence of water under an inert gas atmosphere, subsequently dehydrating water in the system by azeotropy and then performing a second reaction with a halogenoalkoxysilane in the presence of a polar solvent, an industrially useful sulfur-containing organosilicon compound is easily obtained.

The third invention is also preferable on the point that it is possible to extremely simplify the production steps because the solvent capable of undergoing azeotropy with water can be collectively charged together with these raw materials at the time of dehydration.

### INDUSTRIAL APPLICABILITY

According to the present invention, a high-purity sulfur-containing organosilicon compound having a polysulfide structure can be obtained by an inexpensive and simple method. The sulfur-containing organosilicon compound is used as a substance for coupling a synthetic rubber or a natural rubber having an unsaturated bond with a white filler compounded in the rubber, such as silica, clay, talc, etc., or a filler such as surface-modified carbon black, etc.

## Claims

1. A method for producing a sulfur-containing organosilicon compound comprising mixing an alkali hydrosulfide, sulfur and an alkali hydroxide at from 50 to 150 °C in the presence of water under an inert gas atmosphere to allow the mixture to react, and after dehydrating the obtained reaction mixture, reacting it with a halogenoalkoxysilane represented by the following general formula [I] in a polar solvent to obtain a sulfur-containing organosilicon compound represented by the following general formula [II]:
(R¹-O)ₙ(R¹)₃₋ₙ-Si-R²-X [I]
wherein
R¹ is a monovalent hydrocarbon group having from 1 to 16 carbon atoms; R² is a divalent hydrocarbon group having from 1 to 9 carbon atoms; X is a halogen atom; and n is an integer of from 1 to 3, and
(R¹-O)ₙ(R¹)₃₋ₙ-Si-R²-Sₘ-R²-Si-(R¹)₃₋ₙ (O-R¹)ₙ [II]
wherein
R¹ and R² are the same as the definitions of the general formula [I] ; n is an integer of from 1 to 3; and m is an integer of from 1 to 12.

2. A method for producing a sulfur-containing organosilicon compound comprising mixing sulfur and an alkali hydroxide at from 50 to 150 °C in the presence of water under an inert gas atmosphere to allow the mixture to react, and after dehydrating the obtained reaction mixture, reacting it with a halogenoalkoxysilane represented by the following general formula [I] in a polar solvent to obtain a sulfur-containing organosilicon compound represented by the following general formula [II]:
(R¹-O)ₙ(R¹)₃₋ₙ-Si-R²-X [I]
wherein
R¹ is a monovalent hydrocarbon group having from 1 to 16 carbon atoms; R² is a divalent hydrocarbon group having from 1 to 9 carbon atoms; X is a halogen atom; and n is an integer of from 1 to 3, and
(R¹-O)ₙ(R¹)₃₋ₙ-Si-R²-Sₘ-R²-Si- (R¹)₃₋ₙ(O-R¹)ₙ [II]
wherein
R¹ and R² are the same as the definitions of the general formula [I]; n is an integer of from 1 to 3; and m is an integer of from 1 to 12.

3. A method for producing a sulfur-containing organosilicon compound comprising mixing an alkali hydrosulfide, sulfur and an alkali hydroxide, or an alkali sulfide and sulfur, in the presence of water and a solvent capable of undergoing azeotropy with water under an inert gas atmosphere to allow the mixture to react, and after dehydrating the obtained reaction mixture by azeotropy, reacting it with a halogenoalkoxysilane represented by the following general formula [I] in a polar solvent to obtain a sulfur-containing organosilicon compound represented by the following general formula [II]:
(R¹-O)ₙ(R¹)₃₋ₙ-Si-R²-X [I]
wherein
R¹ is a monovalent hydrocarbon group having from 1 to 16 carbon atoms; R² is a divalent hydrocarbon group having from 1 to 9 carbon atoms; X is a halogen atom; and n is an integer of from 1 to 3, and
(R¹-O)ₙ(R¹)₃₋ₙ-Si-R²-Sₘ-R²-Si-(R¹)₃₋ₙ(O-R¹)ₙ [II]
wherein
R¹ and R² are the same as the definitions of the general formula [I]; n is an integer of from 1 to 3; and m is an integer of from 1 to 12.

4. The method for producing a sulfur-containing organosilicon compound according to claim 1, wherein the alkali hydrosulfide is sodium hydrosulfide and/or potassium hydrosulfide.

5. The method for producing a sulfur-containing organosilicon compound according to claim 1, wherein the alkali hydrosulfide is a hydrous alkali hydrosulfide.

6. The method for producing a sulfur-containing organosilicon compound according to claim 3, wherein the alkali hydrosulfide is sodium hydrosulfide and/or potassium hydrosulfide, and the alkali sulfide is sodium sulfide and/or potassium sulfide.

7. The method for producing a sulfur-containing organosilicon compound according to claim 3, wherein the alkali hydrosulfide is a hydrous alkali hydrosulfide, and the alkali sulfide is a hydrous alkali sulfide.

8. The method for producing a sulfur-containing organosilicon compound according to any one of claims 1 to 3, wherein the alkali hydroxide is sodium hydroxide and/or potassium hydroxide.

9. The method for producing a sulfur-containing organosilicon compound according to claim 1 or 2, wherein the dehydration is heating under reduced pressure or at atmospheric pressure, or moisture evaporation by azeotropy of an azeotropic solvent and water.

10. The method for producing a sulfur-containing organosilicon compound according to claim 9, wherein the azeotropic solvent is selected from the group consisting of xylene, toluene, octane, nonane, decane, undecene and a combination of two or more members thereof.

11. The method for producing a sulfur-containing organosilicon compound according to any one of claims 1 to 3, wherein the polar solvent is selected from the group consisting of an alcohol, an ether, a ketone and a combination of two or more members thereof.

12. The method for producing a sulfur-containing organosilicon compound according to claim 11, wherein the alcohol is selected from the group consisting of methanol, ethanol, propanol and a combination of two or more members thereof.

13. The method for producing a sulfur-containing organosilicon compound according to claim 11, wherein the ether is selected from the group consisting of tetrahydrofuran, 2-methyltetrahydrofuran, tetrahydropyran, crown ether, dimethoxyethane, diethylene glycol dimethyl ether, triethylene glycol dimethyl ether, diethylene glycol dibutyl ether, propylene glycol dimethyl ether and a combination of two or more members thereof.

14. The method for producing a sulfur-containing organosilicon compound according to claim 11, wherein the ketone is acetone and/or methyl ethyl ketone.

15. The method for producing a sulfur-containing organosilicon compound according to claim 3, wherein the solvent capable of undergoing azeotropy is at least one member selected from the group consisting of an alcohol, an ether, a ketone and an aromatic hydrocarbon.
